# EUROPÄISCHE PATENTSCHRIFT

(11) **EP 4 202 204 B1**
(45) Veröffentlichungstag und Bekanntmachung des Hinweises auf die Patenterteilung: **10.09.2025**
(21) Anmeldenummer: 22207445.2
(22) Anmeldetag: 15.11.2022
(51) Int. Cl.: F03D 3/02, F03D 9/46

(54) **VERTIKAL-ACHSEN-WIND-TURBINEN-MODUL**
VERTICAL AXIS WIND TURBINE MODULE
MODULE DE TURBINE EOLIENNE A AXE VERTICAL

(30) Priorität: 21.12.2021 DE 202021106950 U
(43) Veröffentlichungstag der Anmeldung: 28.06.2023
(73) Patentinhaber: Trauschke, Siegfried, 85586 Poing (DE)
(72) Erfinder: Trauschke, Siegfried, 85586 Poing (DE)
(74) Vertreter: Kuhnen & Wacker Patent- und Rechtsanwaltsbüro PartG mbB

(56) Entgegenhaltungen:
- WO-A1-2020/089330
- WO-A1-2020/128665
- US-A- 5 272 378
- US-A1- 2019 003 458

## Beschreibung

Die Erfindung betrifft Vertikal-Achsen-Wind-Turbinen (VAWT), Vertikal-Achsen-Wind-Turbinen-Module mit mehreren Vertikal-Achsen-Wind-Turbinen (VAWT), Turbinensysteme und Windkraftanlagen.

Vertikal-Achsen-Wind-Turbinen (VAWT), im Folgenden allgemein als VAWTs bezeichnet, eignen sich aufgrund des robusten Betriebsverhaltens, den geringen Schallemissionen und der Vermeidung von Schattenschlägen und ihrer kompakten Bauweise insbesondere für den Betrieb in Wohngegenden und an Standorten mit hohen Geräusch- und Lärmanforderungen. Nachteilig sind die geringen Wirkungsgrade dieser Anlagenform mit oftmals nur ca. 20% im Gegensatz zu Horizontal-Achsen-Wind-Turbinen (HAWT), die einen Wirkungsgrad von ca. 40% aufweisen können.

Die DE 103 31 682 A1 offenbart eine Windkraftanlage umfassend zumindest einen Rotor, der um eine vertikale Achse rotiert und einen Generator antreibt. Dieser Rotor umfasst eine Anzahl von Rotorblättern, die um die Rotationsachse herum angeordnet sind. Um den Rotor herum befindet sich eine Leitflächenkonstruktion, die dazu dient, den auf die Anlage treffenden Wind optimal auf den Rotor zu lenken und auf der Auslassseite die Luft wieder ausströmen zu lassen. Bei Anlagen mit einer solchen Anordnung kann der Wirkungsgrad verbessert werden, wenn der Rotor nach dem Durchströmprinzip betrieben wird, d. h., die Rotorblätter laufen nicht in der Rotationsachse zusammen, sondern sind um einen freien Durchströmraum herum angeordnet, durch den in jeder Winkelstellung des Rotors ein Luftstrom möglich ist. Die Leitflächenkonstruktion verfügt über einen Strömungseinlass, durch den der Luftstrom seitlich auf den Rotor wirken kann. Dieser Strömungseinlass wird beidseitig von zwei auf den Rotor zulaufenden Leitflächen begrenzt, von denen diejenige Leitfläche, die in Bezug auf die Umlaufrichtung des Rotors stromaufwärts liegt, einen konkav gewölbten horizontalen Querschnitt aufweist. Ferner umfasst die Leitflächenkonstruktion einen entsprechenden Strömungsauslass, der dem Strömungseinlass in Bezug auf den Rotor gegenüberliegt.

Die DE 10 2009 040 467 A1 offenbart eine Windturbine mit vertikal stehender Achse und mit einer walzenförmigen Windturbine, die ausgerüstet ist mit einem inneren Rotorzylinder, der von Luft beaufschlagte Laufschaufeln aufweist und insbesondere dem Antreiben eines umlaufenden Stromerzeugers dient und einen den Rotorzylinder umschließenden feststehenden Leitzylinder, der ortsfeste Leitlamellen aufweist, die den ihnen zugeführten Luftstrom auf die Laufschaufeln des Rotorzylinders leiten und Fangflügel, die außerhalb der Leitlamellen des feststehenden Leitzylinders auf dessen Leitlamellen gerichtet sind, wobei die Fangflügel zu einem Schwenkzylinder gehören, mit dem sie in eine optimale Fangstellung schwenkbar sind, vorzugsweise zumindest teilweise entgegen dem anströmenden Luftstrom, wobei die Fangflügel in Anströmrichtung von vorn nach hinten gestaffelt von Fangflügel zu Fangflügel weiter seitlich ausladend enden, sodass die Fangflügel ihnen zugemessene Teilströme des anströmenden Luftstromes auffangen und zu den Leitlamellen umleiten und wobei die Fangflügel vorzugsweise auf beiden Seiten der vom Luftstrom angeströmten Zylinderwölbung die gleichen Ausrichtungen zum Luftstrom erfahren.

Die EP 3 736 439 A1 offenbart eine Vertikal-Achsen-Wind-Turbinen (VAWT) mit zwei gegenläufigen Rotoren, die auf einer ersten und einer zweiten beabstandeten vertikalen Achse montiert sind. Jeder Rotor weist eine Vielzahl von Rotorblättern auf, die sich von einem Außenumfang im Allgemeinen nach innen erstrecken, wobei die vertikalen Achsen auf einer Tragstruktur montiert sind, die wiederum um eine dritte vertikale Achse auf einer Plattform drehbar ist. Die dritte Achse ist von einem Punkt in der Mitte zwischen der ersten und der zweiten Achse in einer Richtung um 90 Grad zu und nach vorne von einer Linie zwischen der ersten und der zweiten Achse beabstandet. Die VAWT weist ferner eine Leitschaufel auf, die an der Stützstruktur montiert ist und einen Scheitelpunkt vor der dritten vertikalen Achse in der Richtung unter 90 Grad von einer Linie zwischen der ersten und der zweiten Achse aufweist. Die Leitschaufel weist linke und rechte symmetrische Schaufelabschnitte auf, die sich zu den Rotoren hin erstrecken, um einen Luftstrom vom Wind hauptsächlich zu Abschnitten der Rotoren außerhalb der ersten und zweiten Achse zu lenken.

WO2020089330A1 offenbart ein Windenergie-Energieversorgungssystem, umfassend eine Vielzahl von Windturbinen vom Typ mit vertikaler Achse, einschließlich einer vertikalen Drehachse, mit der mindestens ein Flügel verbunden ist, und um welche Drehachse der mindestens eine Flügel so angeordnet ist, dass er sich während des Betriebs dreht, wobei der Wind weht Turbinen sind mechanisch so miteinander verbunden, dass jede zweite Windkraftanlage so angeordnet ist, dass sie sich in einer ersten Drehrichtung dreht, und dass jede andere Windkraftanlage des Systems so angeordnet ist, dass sie sich in einer zweiten Drehrichtung dreht, die der ersten entgegengesetzt ist Drehrichtung.

WO2020128665A1 offenbart eine Rotorturbine mit gegenseitigen Einsätzen, die dadurch gekennzeichnet sind, dass die Flügel gegenseitig eingesetzt sind und sich in entgegengesetzte Richtungen drehen, außerdem wird der aus dem Rücklauf resultierende Wind so genutzt, um die Rotorrotation auf der Seite zu verstärken, und umgekehrt. Diese Rotorturbine ist auch für die Geräte gedacht, die mit einer Turbine mit mehreren Rotoren verbunden sind, die effektiv, effizient und kompakt sind, insbesondere für eine Turbine mit mehreren Rotoren, die in Wasserströmungen eingesetzt werden.

Aufgrund Ihrer kompakten Bauweise ist eine spezielle Verwendung der Vertikal-Achsen-Wind-Turbinen (VAWT) die Erzeugung von Energie durch den Fahrtwind, wie er beispielsweise am Seitenstreifen oder im Mittelstreifen von Autostraßen, z.B. Autobahnen, erzeugt wird. Bekannt ist hier die Verwendung von einzelnen VAWTs im Mittelstreifen von Autobahnen.

Bei natürlichem Wind steht die Effizienz der Windturbinen an erster Stelle. Faktoren wie Anlaufverhalten und Trägheit des Systems spielen hier keine große Rolle, denn der natürliche Wind sorgt für stundenlange, frontale Einwirkung der Strömung auf die Turbine. Bei Fahrtwind jedoch trifft die Strömung je nach Geschwindigkeit des Fahrzeuges (z.B. LKW) mit bis zu 60km/h im Sekundenbereich auf die Turbine. Hier steht an erster Stelle das Anlaufverhalten, an zweiter Stelle die Trägheit des Systems und an dritter Stelle kommt die Effizienz. Man kann die Effizienz nicht nutzen, wenn ein sicheres Anlaufverhalten und eine minimale Trägheit nicht erfüllt sind. Nachteilig bei bekannten Vertikal-Achsen-Wind-Turbinen (VAWT) für die Nutzung von Fahrtwind ist beispielsweise, dass die Anlaufzeit der Einzelturbinen meist länger ist als die Zeit, die ein Fahrzeug benötigt, um die Einzelturbine zu passieren. Hierdurch kann die Energie des Fahrtwindes nicht vollständig ausgenutzt werden, so dass der Wirkungsgrad gering ist.

Eine Aufgabe der Erfindung ist es daher Nachteile bestehender Vertikal-Achsen-Wind-Turbinen (VAWT), insbesondere bei der Verwendung zur Nutzung von Fahrtwind an Straßen, zu vermeiden um den Wirkungsgrad zu erhöhen.

Diese Aufgabe wird durch ein Vertikal-Achsen-Wind-Turbinen-Modul, ein Turbinensystem und eine Windkraftanlage der nachfolgend beschriebenen Art gelöst.

Eine Ausführungsform der Erfindung ist ein Vertikal-Achsen-Wind-Turbinen-Modul mit einer linearen Anordnung von mindestens drei zylinderförmigen Vertikal-Achsen-Wind-Turbinen (VAWT) entlang einer ersten horizontalen Achse umfassend mindestens eine erste zylinderförmige VAWT mit einer ersten Bodenfläche und einer ersten Deckelfläche mit jeweils einem ersten Radius und einer ersten Anzahl an ersten Turbinenflügeln angeordnet in vertikaler Richtung zwischen der ersten Bodenfläche und der ersten Deckelfläche, wobei die erste Anzahl mindestens eins beträgt und die ersten Turbinenflügel eine erste Höhe aufweisen und mindestens einer zweiten zylinderförmigen VAWT mit einer zweiten Bodenfläche und einer zweiten Deckelfläche mit jeweils einem zweiten Radius und einer zweiten Anzahl an zweiten Turbinenflügeln angeordnet in vertikaler Richtung zwischen der zweiten Bodenfläche und der zweiten Deckelfläche, wobei die zweite Anzahl größer gleich der ersten Anzahl ist und die zweiten Turbinenflügel eine zweite Höhe aufweisen die größer ist als die erste Höhe, wobei der Abstand der vertikalen Achsen benachbarter VAWTs entlang der ersten horizontalen Achse kleiner ist als die Summe der Radien der benachbarten VAWTs, und wobei die ersten Bodenflächen und die ersten Deckelflächen der mindestens einen ersten zylinderförmige VAWT an einem äußeren Rand jeweils eine zweite Anzahl an Aussparungen aufweisen die derart ausgebildet sind, dass die zweiten Turbinenflügel dort berührungslos eingreifen können und wobei die mehreren VAWTs derart miteinander gekoppelt sind und die ersten Turbinenflügel in Ihrer Kraftentwicklung derart entgegengesetzt zu den zweiten Turbinenflügeln angeordnet sind, dass im Betrieb entlang der ersten horizontalen Achse jeweils benachbarte VAWTs entgegengesetzt zu einander laufen. Das Vertikal-Achsen-Wind-Turbinen-Modul umfasst auch mindestens einen ersten Windabweiser der tangential und parallel zur ersten horizontalen Achse zwischen zwei entgegengesetzt zu einander laufenden VAWTs angeordnet ist und mindestens einen ersten Windabweiser der tangential und parallel zur ersten horizontalen Achse zwischen zwei entgegengesetzt zu einander laufenden VAWTs angeordnet ist und mindestens einen zweiten Windabweiser der tangential und parallel zur ersten horizontalen Achse zwischen zwei entgegengesetzt zu einander laufenden VAWTs und auf der, in Bezug auf die erste horizontale Achse, dem ersten Windabweiser gegenüberliegenden Seite angeordnet ist.

In einer weiteren Ausführungsform weisen die Querschnitte der ersten Turbinenflügel und der zweiten Turbinenflügel eines von NACA (National Advisory Committee for Aeronautics)-Profil, C - Profil, oder Lenz-Flügel-Profil auf.

In einer weiteren Ausführungsform sind die ersten Turbinenflügel und die zweiten Turbinenflügel um eine vertikale Achse drehbar gelagert.

In einer weiteren Ausführungsform ist die erste Anzahl und die zweite Anzahl eines von 3 oder 4.

In einer weiteren Ausführungsform liegt die Turbinenanzahl zwischen 2 und 12.

In einer weiteren Ausführungsform liegen die erste Höhe und die zweite Höhe in einem Bereich zwischen 100 cm bis 600 cm.

In einer weiteren Ausführungsform sind die ersten und zweiten Turbinenflügel jeweils aus mehreren Segmenten vertikal zusammengefügt.

In einer weiteren Ausführungsform sind die ersten und zweite Bodenflächen und die ersten und zweiten Deckelflächen aus einem von Aluminium oder Stahl ausgebildet.

In einer weiteren Ausführungsform sind die ersten und zweiten Turbinenflügel aus einem von Aluminium, Kunststoff, insbesondere Polyoxymethylen (POM), Glasfaser verstärkter Kunststoff (GFK), Kohlenstofffaser verstärkter Kunststoff (CFK), ausgebildet.

In einer weiteren Ausführungsform ist jede VAWT oben und unten gelagert.

In einer weiteren Ausführungsform liegt der Durchmesser jeder zylinderförmigen VAWT zwischen 50cm und 150cm, bevorzugt bei 100cm.

In einer weiteren Ausführungsform sind die ersten und zweiten Turbinenflügel in vertikaler Richtung aus mindestens zwei Segmenten zusammengesetzt und jedes der Segmente in vertikaler Richtung weist eine Höhe zwischen 30cm und 70cm, bevorzugt 50cm auf.

Eine weitere Ausführungsform der Erfindung umfasst ein Turbinensystem mit mindestens zwei Vertikal-Achsen-Wind-Turbinen-Modulen die linear entlang der horizontalen Achse angeordnet sind und mit mindestens einem Freilauf zwischen zwei Vertikal-Achsen-Wind-Turbinen-Modulen.

In einer weiteren Ausführungsform des Turbinensystems weisen mindestens zwei der Vertikal-Achsen-Wind-Turbinen-Module eine unterschiedliche Anzahl an VAWTs auf.

Eine weitere Ausführungsform der Erfindung umfasst eine Windkraftanlage mit mindestens einem Vertikal-Achsen-Wind-Turbinen-Modul oder einem Turbinensystem und mit mindestens einem Generator, der mit dem mindestens einen Vertikal-Achsen-Wind-Turbinen-Modul oder dem Turbinensystem verbunden ist.

Die Erfindung ist in den unabhängigen Ansprüchen definiert. Weiterentwicklungen der Erfindung sind in den abhängigen Ansprüchen ausgeführt.

Die Erfindung wird in den nachfolgend beschriebenen Figuren beispielhaft erläutert.
- Fig. 1: zeigt in perspektivischer Ansicht Details einer beispielhaften Ausführungsform eines erfindungsgemäßen Vertikal-Achsen-Wind-Turbinen-Moduls
- Fig. 2: zeigt in Draufsicht Details einer weiteren beispielhaften Ausführungsform eines erfindungsgemäßen Vertikal-Achsen-Wind-Turbinen-Moduls

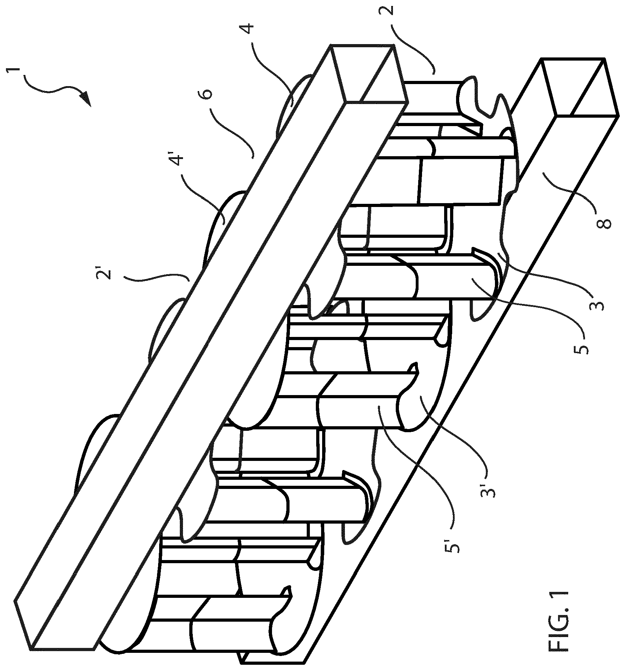

Figur 1 zeigt beispielhaft Details einer bevorzugten Ausführungsform eines Vertikal-Achsen-Wind-Turbinen-Moduls 1. Das Vertikal-Achsen-Wind-Turbinen-Modul mit einer linearen Anordnung mehrerer zylinderförmiger Vertikal-Achsen-Wind-Turbinen (VAWT) 2 entlang einer ersten horizontalen Achse umfassend mindestens eine erste zylinderförmige VAWT 2 mit einer ersten Bodenfläche 3 und einer ersten Deckelfläche 4 mit jeweils einem ersten Radius und einer ersten Anzahl an ersten Turbinenflügeln 5 angeordnet in vertikaler Richtung zwischen der ersten Bodenfläche 3 und der ersten Deckelfläche 4, wobei die erste Anzahl mindestens eins beträgt und die ersten Turbinenflügel 5 eine erste Höhe aufweisen und mindestens einer zweiten zylinderförmigen VAWT 2' mit einer zweiten Bodenfläche 3' und einer zweiten Deckelfläche 4' mit jeweils einem zweiten Radius und einer zweiten Anzahl an zweiten Turbinenflügeln 5' angeordnet in vertikaler Richtung zwischen der zweiten Bodenfläche 3' und der zweiten Deckelfläche 4', wobei die zweite Anzahl größer gleich der ersten Anzahl ist und die zweiten Turbinenflügel 5' eine zweite Höhe aufweisen die größer ist als die erste Höhe, wobei der Abstand der vertikalen Achsen benachbarter VAWTs entlang der ersten horizontalen Achse kleiner ist als die Summe der Radien der benachbarten VAWTs 2, 2', und wobei die ersten Bodenflächen 3 und die ersten Deckelflächen 4 der mindestens einen ersten zylinderförmige VAWT 2 an einem äußeren Rand jeweils eine zweite Anzahl an Aussparungen 6 aufweisen, die derart ausgebildet sind, dass die zweiten Turbinenflügel 5' dort berührungslos eingreifen können. Vorzugsweise ist die erste Anzahl gleich der zweiten Anzahl. Durch diese Überlappung der VAWTs lassen sich die Zwischenräume zwischen den VAWTs verringern und dadurch die Luftströmung in den Flügeln je nach Überlappung wechselseitig verlängern wodurch sich das Drehmoment erhöht. Durch die Überlappung der VAWTs ist es möglich auf einer Längeneinheit mehr Turbinen anzuordnen als ohne eine Überlappung. Bei beispielsweise einem Turbinendurchmesser von 75cm lassen sich auf eine Länge von 100m ohne Überlappung rechnerisch etwa 133 Turbinen anordnen, schon bei einer Überlappung von 10cm lassen sich auf die Länge von 100m etwa 153 Turbinen anordnen und bei einer Überlappung von 20cm lassen sich auf die Länge von 100m sogar etwa 181 Turbinen anordnen. Durch die Überlappung lässt sich die Leistung eines Vertikal-Achsen-Wind-Turbinen-Moduls daher signifikant erhöhen. Die mehreren VAWTs 2, 2' sind derart miteinander gekoppelt und die ersten Turbinenflügel 5 sind in Ihrer Kraftentwicklung derart entgegengesetzt zu den zweiten Turbinenflügeln 5' angeordnet, dass im Betrieb entlang der ersten horizontalen Achse jeweils benachbarte VAWTs 2, 2' entgegengesetzt zu einander laufen.

Durch die Kopplung der VAWTs 2, 2' miteinander und die Gegenläufigkeit kann gewährleistet werden, dass der Anlaufwiderstand der zeitlich nach der ersten VAWT angetriebenen VAWT reduziert wird, da diese schon durch die erste VAWT in Gang gesetzt wurde. Die Gegenläufigkeit benachbarter Turbinen reduziert außerdem die Vibrationen, so dass ein geräuscharmer Betrieb ermöglicht wird. Außerdem verändert sich, durch die spezielle Anordnung, das Anlaufverhalten der Turbinen sowie das Drehmoment auch bei einem Strömungseintritt von 45 Grad nicht.

Der erste Radius und der zweite Radius jeder zylinderförmigen VAWT 2, 2' liegt bevorzugter Weise zwischen 25cm und 75cm, besonders bevorzugt bei 50cm. Damit liegt der Durchmesser jeder zylinderförmigen VAWT 2, 2' bevorzugter Weise zwischen 50cm und 150cm, besonders bevorzugt bei 100cm. Mit diesen Maßen ist sichergestellt, dass ein erfindungsgemäßes Vertikal-Achsen-Wind-Turbinen-Modul 1 schmal genug ist, um beispielsweise am Straßenrand oder aber im Mittelstreifen einer Autobahn installiert zu werden.

Die Querschnitte der ersten Turbinenflügel 5 und der zweiten Turbinenflügel 5' können eines von NACA (National Advisory Committee for Aeronautics)-Profil, C - Profil, oder Lenz-Flügel-Profil aufweisen. Besonders vorteilhaft ist das Lenz-Flügel-Profil.

In einer weiteren Ausführungsform sind die ersten Turbinenflügel 5 und die zweiten Turbinenflügel 5' um eine vertikale Achse drehbar gelagert. Hierdurch lässt sich durch das Verdrehen der Turbinenflügel bei einer Luftströmung aus einer Richtung vermeiden, dass zur Luftströmung entgegengesetzt angeordnete Turbinenflügel die Turbine bremsen.

In einer weiteren Ausführungsform ist die erste Anzahl und die zweite Anzahl eines von 3 oder 4.

In einer weiteren Ausführungsform liegt die Turbinenanzahl zwischen 2 und 12. Je höher die Anzahl der Turbinen (VAWT) 2 pro Vertikal-Achsen-Wind-Turbinen-Modul ist, umso länger kann das Modul, beispielsweise von dem Fahrtwind eines vorbeifahrenden Lastwagens, angetrieben werden. Da alle Turbinen 2 eines Moduls 1 mit einander gekoppelt sind, setzt die erste Turbine beim ersten Kontakt alle anderen Turbinen in Bewegung, so dass dann der Anlaufwiderstand der der ersten Turbine folgenden Turbinen verringert ist und diese im Vorbeifahren des Lastwagens auf eine höhere Geschwindigkeit beschleunigt werden können im Vergleich zu einer einzelnen Turbine.

In einer weiteren Ausführungsform liegen die erste Höhe und die zweite Höhe in einem Bereich zwischen 100 cm bis 600 cm. Durch die Wahl dieses Höhenbereiches kann bei einer durchschnittlichen Höhe eines Lastwagens von bis zu 400cm der Fahrtwind maximal genutzt werden.

Aus fertigungstechnischen Gründen und um bei der Höhe der Turbinenflügel 5, 5' flexibel zu sein ist es in einer weiteren Ausführungsform besonders vorteilhaft die ersten und zweiten Turbinenflügel 5, 5' jeweils aus mehreren Segmenten vertikal zusammenzufügen. Die einzelnen Segmente können hierbei beispielsweise miteinander verschraubt oder vernietet werden. Jedes der Segmente kann in vertikaler Richtung eine Höhe zwischen 30cm und 70cm, bevorzugt 50cm aufweisen.

Die ersten und zweiten Bodenflächen 3, 3' und die ersten und zweiten Deckelflächen 4, 4' können aus einem von Aluminium oder Stahl ausgebildet sein. Aber auch beispielsweise die Verwendung von Kunststoff, wie beispielsweise Glasfaser verstärkter Kunststoff (GFK) und Kohlenstofffaser verstärkter Kunststoff (CFK) sind möglich.

Die ersten und zweiten Turbinenflügel 5, 5' können aus einem von Aluminium, Kunststoff, insbesondere Polyoxymethylen (POM), Glasfaser verstärkter Kunststoff (GFK), Kohlenstofffaser verstärkter Kunststoff (CFK), ausgebildet sein.

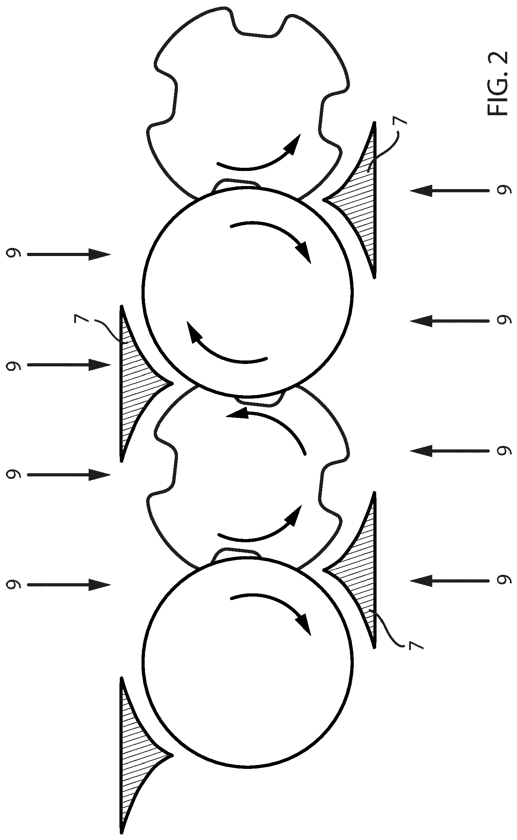

Fig. 2 zeigt in einer weiteren Ausführungsform ein Vertikal-Achsen-Wind-Turbinen-Modul 1 mit mindestens 3 VAWTs 2 und mindestens einem ersten Windabweiser 7 der tangential und parallel zur ersten horizontalen Achse zwischen zwei entgegengesetzt zu einander laufenden VAWTs 2 angeordnet ist. Der Windabweiser kann im Querschnitt zu seiner vertikalen Achse bevorzugter Weise im Wesentlichen die Form eines gleichschenkligen, stumpfwinkligen Dreiecks aufweisen, dessen Spitze des stumpfen Winkels sich in Draufsicht auf das Vertikal-Achsen-Wind-Turbinen-Modul 1 in den Zwischenraum zweier benachbarter VAWTs fügt. Da benachbarte VAWTs 2 entgegengesetzt zueinander laufen und der an Straßen erzeugte Fahrtwind 9 im Wesentlichen senkrecht zur ersten horizontalen Achse auf das Vertikal-Achsen-Wind-Turbinen-Modul 1 auftrifft, kann mittels der Windabweiser 7 vermieden werden, dass die antreibende Luftströmung eine oder mehrere der Turbinen durch eine Gegenströmung signifikant abbremst. Aktuelle Untersuchungen vertikaler Windturbinen zeigen, dass diejenigen Turbinenflügel, die sich bei Rotation der Vertikal-Achsen-Wind-Turbine entgegen der antreibenden Luftströmung bewegen einen Leistungsverlust von etwa 30% bewirken können. Die Windabweiser 7 sind bevorzugter Weise derart in dem Zwischenraum zweier benachbarter VAWTs 2 angeordnet, dass die Spitze des stumpfen Winkels des Windabweisers 7 entgegen die Drehrichtung der benachbarten VAWTs 2 zeigt. Die Windabweiser sind dadurch in der Lage zu verhindern, dass die Flügel gegen die Antriebsströmung laufen und befeuern die Flügel, wenn sie sich in einer günstigeren Position befinden. Beispielsweise ist bei einer Standard Vertikalturbine mit Lenzflügel, 1,4 m Durchmesser und 17% Effizienz, das Anlaufverhalten nicht zuverlässig. Sie kann bei Fahrtwind nur eine Hälfte der Turbine positiv nutzen (= 0,7m) und hat eine große Trägheit. Viertelt man die Kreisfläche der 1,4m Turbine, erhält man vier Kreisflächen mit 70cm Durchmesser, sprich vier Turbinen. Diese vier Turbinen können zu einem Modul verbunden werden und ineinander und gegeneinander laufen (der Achsabstand kann beispielsweise 63cm betragen). Werden die Negativhälften der Turbinen die gegen die Strömung laufen mit Windabweisern abgedeckt, ist das Resultat, dass die auf die Windabweiser treffende Strömung noch zusätzlich in den positiven Bereich der Turbinen verwirbelungsfrei eingeleitet wird. Die Einwirkung des Fahrtwindes ist dann nur noch positiv und verlängert sich um das 2,7 fache gegenüber der 1,4m Turbine. Das Anlaufverhalten ist dadurch absolut zuverlässig und die Trägheit des Systems kann erheblich verringert werden. Im Vergleich dazu müsste die 1,4m Turbine etwa eine Effizienz von 44% haben, um die Leistung des Moduls, welches x-beliebig verlängert werden kann, zu erreichen.

Die Windabweiser 7 können außerdem eventuellen Eiswurf auf Fahrzeuge oder Fahrbahn durch rotierende Turbinen verhindern.

Gemäß einer weiteren Ausführungsform können an Stellen des Vertikal-Achsen-Wind-Turbinen-Moduls 1 an dem die Luftströmung nach dem Antreiben der Turbinen das Vertikal-Achsen-Wind-Turbinen-Moduls 1 wieder verlässt, Feinstaubfilter eingesetzt sein. Der durch das Turbinensystem geleitete Fahrtwind wird dabei durch die Feinstaubfilter gedrückt und trägt hierdurch beträchtlich zur Luftreinigung insbesondere in kritischen stadtnahen Zonen (z. B. auf Umgehungs- oder Ringstraßen) bei. Insbesondere im städtischen Verkehr, bei der Anordnung der Vertikal-Achsen-Wind-Turbinen-Module 1 am Straßenrand können auf diese Weise große Mengen von Luft gereinigt und die Feinstaubbelastung verringert werden.

Für den Fall der Anordnung des Vertikal-Achsen-Wind-Turbinen-Moduls 1 beispielsweise im Mittelstreifen einer Autobahn, bei der der Fahrtwind der Fahrzeuge aus entgegengesetzten Richtungen kommt, können die Windabweiser 7, wie in Fig. 2 gezeigt, auch auf beiden gegenüberliegenden Seiten des Vertikal-Achsen-Wind-Turbinen-Moduls 1 angeordnet sein.

Zur Befestigung der Drehachsen der VAWTs weist jedes Vertikal-Achsen-Wind-Turbinen-Modul 1 mindestens eine Achslagervorrichtung 8 auf. Eine vorteilhafte Ausführungsform eines Vertikal-Achsen-Wind-Turbinen-Moduls 1, wie in Fig. 1 gezeigt, weist eine untere und obere Achslagervorrichtung 8 auf, um jede VAWT 2 oben und unten zu lagern. Durch die Lagerung oben und unten können die vertikalen Achsen der VAWTs 2 verwindungssicher gehalten werden, so dass ein vibrationsarmer und lagerschonender Lauf gewährleistet wird. Außerdem kann durch eine obere Lagerung sichergestellt werden, dass die ineinanderlaufenden Turbinen auch bei Turbulenzen berührungslos bleiben. Die vertikale Konstruktion für die obere Lagerung kann sich in einer Ausführungsform im Windabweiser befinden und vermeidet auf diese Weise offenliegende und daher leistungshemmende Teile vor der Turbine.

Eine weitere Ausführungsform der Erfindung umfasst ein Turbinensystem mit mindestens zwei der oben beschriebenen Vertikal-Achsen-Wind-Turbinen-Module 1 die linear entlang der horizontalen Achse angeordnet sind und mit mindestens einem Freilauf zwischen zwei Vertikal-Achsen-Wind-Turbinen-Modulen 1. Dieser Freilauf bewirkt, dass im Fall der Verwendung mehrerer Vertikal-Achsen-Wind-Turbinen-Module 1 im Straßenverkehr, die in Fahrtrichtung gesehen vor dem Freilauf liegenden Turbinen durch den Fahrtwind angetrieben werden können ohne die in Fahrtrichtung gesehen nach dem Freilauf liegenden Turbinen mitantreiben zu müssen. Andererseits treiben die nach dem Freilauf liegenden Turbinen, welche später von dem Fahrtwind erfasst werden als die vor dem Freilauf liegenden Turbinen, die vor dem Freilauf liegenden Turbinen mit an und erhöhen so deren Geschwindigkeit und Leistungserzeugung. Diese Anordnung verbessert somit das Anlaufverhalten des Turbinensystems dadurch, dass nicht sofort mit dem ersten Kontakt des Fahrtwindes mit dem Turbinensystem die gesamte Masse aller Turbinen gleichzeitig bewegt werden muss, sondern erst einmal nur diejenigen die in Fahrtrichtung gesehen vor dem Freilauf liegen. An der Stelle der linear entlang der horizontalen Achse angeordneten Vertikal-Achsen-Wind-Turbinen-Module 1 an der ein Freilauf eingebaut ist, werden die Vertikal-Achsen-Wind-Turbinen-Module 1 derart angeordnet, dass sich benachbarte Turbinen 2, 2' nicht überlappen, um eine Kollision der Turbinenflügel zu vermeiden. Im Falle der Verwendung von Windabweisern 7 können an der Stelle des Freilaufes vorteilhafterweise symmetrische Windabweiser verwendet werden.

Durch den Zusammenschluss mehrerer der Vertikal-Achsen-Wind-Turbinen-Module 1 lassen sich Längen von bis zu 100m erreichen. Und das beispielsweise bei einer Breite von 0,75m. Ein LKW mit 80km/h (das entspricht ungefähr 22 m/s) fährt in etwa 5 Sekunden die Strecke ab. Ein 100m langes Turbinensystem kann über mehrere Freiläufe verfügen, damit das Turbinensystem Stück für Stück anlaufen kann. Ein nachfolgender LKW erhöht dann auf dieselbe Weise die Drehzahl und damit die Leistung der Anlage. Durch die hohe Anzahl der Turbinen 2, 2' ist eine große Masse, die eine längere Nachlaufzeit garantiert. Somit können die Anlagen den Fahrtwind der Fahrzeuge, insbesondere der LKWs und PKWs, entweder im Mittelstreifen oder aber beidseitig der Autobahnen aufnehmen und mit Hilfe eines Generators in Strom umwandeln. Vorteile einer Anordnung der vorliegenden Erfindung im Mittelstreifen oder aber beidseitig der Autobahnen sind unter anderem, dass das Landschaftsbild erhalten bleibt, dass keine zusätzlichen Grundflächen benötigt werden (keine Flächenverschwendung), dass Vogelflug nicht behindert oder gefährdet wird, dass eine Lärmbelästigung durch Rotorgeräusche entfällt und dass die Stromerzeugung vor Ort lange Transportwege vermeidet. Auch wenn Wind die Anlage zusätzlich antreiben kann, entfällt die Abhängigkeit von Wind und Sonne. Gerade bei stark befahrenen Straßen lässt sich somit eine kontinuierliche Stromerzeugung sicherstellen. Nachdem es in Deutschland ca. 12.000 km - und im übrigen Europa über 63.000 km Autobahnen gibt - können diese Anlagen einen großen Beitrag zur nationalen und europäischen Stromversorgung leisten. Die Leistung des erfindungsgemäßen Turbinensystems und der Windkraftanlage hängt u.a. von der Verkehrsdichte, dem Abstand der Anlage und der Geschwindigkeit der vorbeifahrenden Fahrzeuge ab. Um eine maximale Leistung des erfindungsgemäßen Turbinensystems und der Windkraftanlage zu erreichen ist es vorteilhaft die Anlagen in möglichst geringem Abstand neben der Fahrbahn aufzustellen. Vorteilhafterweise können benachbarte Vertikal-Achsen-Wind-Turbinen-Module 1 des Turbinensystems zwischen welchen kein Freilauf angeordnet ist derart linear entlang der horizontalen Achse angeordnet sein, dass sich die jeweils äußersten VAWTs der einzelnen Module Überlappen.

In einer weiteren Ausführungsform des Turbinensystems weisen mindestens zwei der Vertikal-Achsen-Wind-Turbinen-Module 1 eine unterschiedliche Anzahl an VAWTs 2 auf. Die maximale Länge eines LKW liegt in Europa für ein Gespann bei 18,75m. Bei einer Geschwindigkeit von 80km/h (= 22 m/s) und einer ungefähren Länge eines Vertikal-Achsen-Wind-Turbinen-Moduls 1 mit 6 Turbinen von 5m passiert ein LKW ein solches Modul in einer viertel Sekunde. Unter Berücksichtigung der Anlaufverzögerung der 6 miteinander gekoppelten Turbinen könnte es sein, dass ein so kurzes Modul aufgrund der kurzen Wechselwirkung von Fahrtwind mit den Turbinen 2 gar nicht zum Anlaufen kommt. Es kann daher vorteilhaft sein, gerade an den Enden des Turbinensystems Vertikal-Achsen-Wind-Turbinen-Module 1 mit einer großen Anzahl - zum Beispiel 12 - gekoppelter Turbinen 2 einzusetzen.

Eine weitere Ausführungsform der Erfindung umfasst eine Windkraftanlage mit mindestens einem Vertikal-Achsen-Wind-Turbinen-Modul 1 oder einem Turbinensystem und mit mindestens einem Generator, der mit dem mindestens einen Vertikal-Achsen-Wind-Turbinen-Modul 1 oder dem Turbinensystem verbunden ist. Vorteilhaft bei dieser Windkraftanlage ist, dass mehrere Turbinen - zusammengefasst in einem oder mehreren Vertikal-Achsen-Wind-Turbinen-Modulen - mit einem Generator betrieben werden können. Es ist aber auch möglich die Windkraftanlage mit mehreren Generatoren zu betreiben. Besonders vorteilhaft ist es einen Generator mit 2 Modulen mit jeweils 4 - 8 Turbinen 2 zu betreiben.

Die Erfindung ist nicht auf die oben beispielhaft beschriebenen Ausführungsformen beschränkt. Der Umfang der Erfindung ist durch die Schutzansprüche definiert.

## Patentansprüche

1. Vertikal-Achsen-Wind-Turbinen-Modul (1) mit einer linearen Anordnung von mindestens drei zylinderförmigen Vertikal-Achsen-Wind-Turbinen (VAWT) (2) entlang einer ersten horizontalen Achse umfassend
mindestens eine erste zylinderförmige VAWT (2) mit einer ersten Bodenfläche (3) und einer ersten Deckelfläche (4) mit jeweils einem ersten Radius und einer ersten Anzahl an ersten Turbinenflügeln (5) angeordnet in vertikaler Richtung zwischen der ersten Bodenfläche (3) und der ersten Deckelfläche (4), wobei die erste Anzahl mindestens eins beträgt und die ersten Turbinenflügel (5) eine erste Höhe aufweisen und
mindestens einer zweiten zylinderförmigen VAWT (2') mit einer zweiten Bodenfläche (3') und einer zweiten Deckelfläche (4') mit jeweils einem zweiten Radius und einer zweiten Anzahl an zweiten Turbinenflügeln (5') angeordnet in vertikaler Richtung zwischen der zweiten Bodenfläche (3') und der zweiten Deckelfläche (4'), wobei die zweite Anzahl größer gleich der ersten Anzahl ist und die zweiten Turbinenflügel (5') eine zweite Höhe aufweisen die größer ist als die erste Höhe wobei der Abstand der vertikalen Achsen benachbarter VAWTs (2, 2') entlang der ersten horizontalen Achse kleiner ist als die Summe der Radien der benachbarten VAWTs (2, 2'), und
wobei die ersten Bodenflächen (3) und die ersten Deckelflächen (4) der mindestens einen ersten zylinderförmige VAWT (2) an einem äußeren Rand jeweils eine zweite Anzahl an Aussparungen (6) aufweisen die derart ausgebildet sind, dass die zweiten Turbinenflügel (5') dort berührungslos eingreifen können und
wobei die mehreren VAWTs (2, 2') derart miteinander gekoppelt sind und die ersten Turbinenflügel (5) in Ihrer Kraftentwicklung derart entgegengesetzt zu den zweiten Turbinenflügeln (5') angeordnet sind, dass im Betrieb entlang der ersten horizontalen Achse jeweils benachbarte VAWTs (2, 2') entgegengesetzt zu einander laufen und
**gekennzeichnet durch**
mindestens einen ersten Windabweiser (7) der tangential und parallel zur ersten horizontalen Achse zwischen zwei entgegengesetzt zu einander laufenden VAWTs (2) angeordnet ist und
mindestens einen zweiten Windabweiser (7) der tangential und parallel zur ersten horizontalen Achse zwischen zwei entgegengesetzt zu einander laufenden VAWTs und auf der, in Bezug auf die erste horizontale Achse, dem ersten Windabweiser (7) gegenüberliegenden Seite angeordnet ist.

2. Vertikal-Achsen-Wind-Turbinen-Modul (1) nach Anspruch 1, wobei die Querschnitte der ersten Turbinenflügel (5) und der zweiten Turbinenflügel (5') eines von NACA (National Advisory Committee for Aeronautics)-Profil, C - Profil, oder Lenz-Flügel-Profil aufweisen.

3. Vertikal-Achsen-Wind-Turbinen-Modul (1) nach einem der Ansprüche 1 oder 2, wobei die ersten Turbinenflügel (5) und die zweiten Turbinenflügel (5') um eine vertikale Achse drehbar gelagert sind.

4. Vertikal-Achsen-Wind-Turbinen-Modul (1) nach einem der Ansprüche 1 bis 3, wobei die erste Anzahl und die zweite Anzahl eines von 3 oder 4 ist.

5. Vertikal-Achsen-Wind-Turbinen-Modul (1) nach einem der Ansprüche 1 bis 4 mit einer Turbinenanzahl an VAWTs (2, 2'), wobei die Turbinenanzahl zwischen 3 und 12 liegt.

6. Vertikal-Achsen-Wind-Turbinen-Modul (1) nach einem der Ansprüche 1 bis 5, wobei die erste Höhe und die zweite Höhe in einem Bereich zwischen 100 cm bis 600 cm liegt.

7. Vertikal-Achsen-Wind-Turbinen-Modul (1) nach einem der Ansprüche 1 bis 6, wobei die ersten und zweiten Turbinenflügel (5, 5') in vertikaler Richtung aus mindestens zwei Segmenten zusammengesetzt sind und jedes der Segmente in vertikaler Richtung eine Höhe zwischen 30cm und 70cm, bevorzugt 50cm aufweist.

8. Vertikal-Achsen-Wind-Turbinen-Modul (1) nach einem der Ansprüche 1 bis 7, wobei die die ersten und zweite Bodenflächen (3, 3') und die ersten und zweiten Deckelflächen (4, 4') aus einem von Aluminium oder Stahl ausgebildet sind.

9. Vertikal-Achsen-Wind-Turbinen-Modul (1) nach einem der Ansprüche 1 bis 8, wobei die ersten und zweiten Turbinenflügel (5, 5') aus einem von Aluminium, Kunststoff, insbesondere Polyoxymethylen (POM), Glasfaser verstärkter Kunststoff (GFK), Kohlenstofffaser verstärkter Kunststoff (CFK), ausgebildet sind.

10. Vertikal-Achsen-Wind-Turbinen-Modul (1) nach einem der Ansprüche 1 bis 9, wobei jede der VAWTs (2, 2') oben und unten gelagert ist.

11. Vertikal-Achsen-Wind-Turbinen-Modul (1) nach einem der Ansprüche 1 bis 10, wobei der Durchmesser jeder zylinderförmigen VAWT (2, 2') zwischen 50cm und 150cm, bevorzugt 100cm beträgt.

12. Turbinensystem umfassend
mindestens zwei Vertikal-Achsen-Wind-Turbinen-Module (1) nach einem der Ansprüche 1 bis 11, die linear entlang der horizontalen Achse angeordnet sind und
mindestens einen Freilauf zwischen zwei Vertikal-Achsen-Wind-Turbinen-Modulen (1).

13. Turbinensystem nach Anspruch 12, wobei mindestens zwei der Vertikal-Achsen-Wind-Turbinen-Module (1) eine unterschiedliche Anzahl an VAWTs (2, 2') aufweisen.

14. Windkraftanlage umfassend mindestens ein Vertikal-Achsen-Wind-Turbinen-Modul (1) nach einem der Ansprüche 1 bis 11 oder ein Turbinensystem nach einem der Ansprüche 12 bis 13 und mindestens einen Generator, der mit dem mindestens einen Vertikal-Achsen-Wind-Turbinen-Modul (1) oder dem Turbinensystem verbunden ist.

## Claims

1. A vertical axis wind turbine module (1) having a linear arrangement of at least three cylinder-shaped vertical axis wind turbines, VAWT, (2) along a first horizontal axis, comprising:
at least one first cylinder-shaped VAWT (2) having a first bottom surface (3) and a first lid surface (4) each having a first radius and a first number of first turbine blades (5) arranged in the vertical direction between the first bottom surface (3) and the first lid surface (4), the first number being at least one and the first turbine blades (5) having a first height, and
at least one second cylinder-shaped VAWT (2') having a second bottom surface (3') and a second lid surface (4') each having a second radius and a second number of second turbine blades (5') arranged in the vertical direction between the second bottom surface (3') and the second lid surface (4'), the second number being equal to or greater than the first number and the second turbine blades (5') having a second height that is greater than the first height, the distance of the vertical axes of adjacent VAWTs (2, 2') along the first horizontal axis being shorter than the sum of the radii of the adjacent VAWTs (2, 2'), and
wherein the first bottom surfaces (3) and the first lid surfaces (4) of the at least one first cylinder-shaped VAWT (2) each have a second number of recesses (6) at an outer edge that are configured such that the second turbine blades (5') can engage there without making contact, and
wherein the plurality of VAWTs (2, 2') are coupled with one another and the first turbine blades (5) are formed opposite to the second turbine blades (5') as far as their force development is concerned in such a way that, during operation, adjacent VAWTs (2, 2') run opposite to one another along the first horizontal axis, and
**characterized by**
at least one first wind deflector (7) that is arranged tangentially and in parallel to the first horizontal axis between two VAWTs (2) that run opposite to one another, and
at least one second wind deflector (7) that is arranged tangentially and in parallel to the first horizontal axis between two VAWTs that run opposite to one another and, with respect to the first horizontal axis, on the side opposite the first wind deflector (7).

2. The vertical axis wind turbine module (1) according to claim 1, wherein the cross-sections of the first turbine blades (5) and the second turbine blades (5') comprise one of a NACA (National Advisory Committee for Aeronautics) profile, a C-profile or a Lenz blade profile.

3. The vertical axis wind turbine module (1) according to any one of claims 1 or 2, wherein the first turbine blades (5) and the second turbine blades (5') are supported rotatably about a vertical axis.

4. The vertical axis wind turbine module (1) according to any one of claims 1 to 3, wherein the first number and the second number is one of 3 or 4.

5. The vertical axis wind turbine module (1) according to any one of claims 1 to 4, having a turbine number of VAWTs (2, 2'), wherein the turbine number is between 3 and 12.

6. The vertical axis wind turbine module (1) according to any one of claims 1 to 5, wherein the first height and the second height are within a range of between 100 cm and 600 cm.

7. The vertical axis wind turbine module (1) according to any one of claims 1 to 6, wherein the first and second turbine blades (5, 5') are assembled from at least two segments in the vertical direction and each of the segments has a height between 30 cm and 70 cm, preferably 50 cm, in the vertical direction.

8. The vertical axis wind turbine module (1) according to any one of claims 1 to 7, wherein the first and second bottom surfaces (3, 3') and the first and second lid surfaces (4, 4') are made of one of aluminum or steel.

9. The vertical axis wind turbine module (1) according to any one of claims 1 to 8, wherein the first and second turbine blades (5, 5') are made of one of aluminum, plastic, especially polyoxymethylene (POM), glass fiber reinforced plastic (GFK), carbon fiber reinforced plastic (CFK).

10. The vertical axis wind turbine module (1) according to any one of claims 1 to 9, wherein each of the VAWTs (2, 2') is supported at the top and the bottom.

11. The vertical axis wind turbine module (1) according to any one of claims 1 to 10, wherein the diameter of each cylinder-shaped VAWT (2, 2') amounts to between 50 cm and 150 cm, preferably 100 cm.

12. A turbine system, comprising:
at least two vertical axis wind turbine modules (1) according to any one of claims 1 to 11, that are arranged linearly along the horizontal axis, and
at least one freewheel between two vertical axis wind turbine modules (1).

13. The turbine system according to claim 12, wherein at least two of the vertical axis wind turbine modules (1) comprise a different number of VAWTs (2, 2').

14. A wind power station, comprising at least one vertical axis wind turbine module (1) according to any one of claims 1 to 11 or a turbine system according to any one of claims 12 to 13 and at least one generator that is connected to the at least one vertical axis wind turbine module (1) or the turbine system.

## Revendications

1. Module de turbine éolienne à axe vertical (1) comprenant un agencement linéaire d'au moins trois éoliennes à axe vertical (VAWT) cylindriques (2) le long d'un premier axe horizontal, comprenant
au moins une première VAWT cylindrique (2) avec une première surface de base (3) et une première surface de recouvrement (4) avec chacune un premier rayon et un premier nombre de premières aubes de turbine (5) disposées dans le sens vertical entre la première surface de base (3) et la première surface de recouvrement (4), le premier nombre étant au moins égal à un et les premières aubes de turbine (5) présentant une première hauteur, et
au moins une deuxième VAWT cylindrique (2') avec une deuxième surface de base (3') et une deuxième surface de recouvrement (4') avec chacune un deuxième rayon et un deuxième nombre de deuxièmes aubes de turbine (5') disposées dans le sens vertical entre la deuxième surface de base (3') et la deuxième surface de recouvrement (4'), le deuxième nombre étant supérieur ou égal au premier nombre et les deuxièmes aubes de turbine (5') présentant une deuxième hauteur supérieure à la première hauteur,
dans lequel la distance entre les axes verticaux des VAWT adjacents (2, 2') le long du premier axe horizontal étant inférieure à la somme des rayons des VAWT adjacents (2, 2'), et
dans lequel les premières surfaces de base (3) et les premières surfaces de recouvrement (4) de au moins une première VAWT cylindrique (2) présentant chacune, sur un bord extérieur, un deuxième nombre d'évidements (6) qui sont conçus de telle sorte que les deuxièmes aubes de turbine (5') peuvent s'y engager sans contact et
dans lequel les multiples VAWT (2, 2') étant couplées entre elles de telle sorte que les premières aubes de turbine (5) soient disposées de manière à exercer une force opposée à celle des deuxièmes aubes de turbine (5') de telle sorte qu'en fonctionnement, les VAWT adjacentes (2, 2') tournent le long du premier axe horizontal (2, 2') tournent dans des sens opposés les uns par rapport aux autres et
**caractérisé par**
au moins un premier déflecteur de vent (7) disposé tangentiellement et parallèlement au premier axe horizontal entre deux VAWT (2) tournant en sens opposés l'un par rapport à l'autre et
au moins un deuxième déflecteur de vent (7) disposé tangentiellement et parallèlement au premier axe horizontal entre deux VAWT tournant en sens inverse l'un par rapport à l'autre et sur le côté opposé au premier déflecteur de vent (7) par rapport au premier axe horizontal.

2. Le module de turbine éolienne à axe vertical (1) selon la revendication 1, dans lequel les sections transversales des premières aubes de turbine (5) et des secondes aubes de turbine (5') ont un profil NACA (National Advisory Committee for Aeronautics), un profil en C ou un profil en aube Lenz.

3. Le module de turbine éolienne à axe vertical (1) selon l'une des revendications 1 ou 2, les premières aubes de turbine (5) et les secondes aubes de turbine (5') étant montées de manière à pouvoir tourner autour d'un axe vertical.

4. Le module de turbine d'éolienne à axe vertical (1) selon l'une des revendications 1 à 3, dans lequel le premier nombre et le deuxième nombre sont l'un des nombres 3 ou 4.

5. Le module de turbine éolienne à axe vertical (1) selon l'une des revendications 1 à 4, comprenant un nombre de turbines VAWT (2, 2'), dans lequel le nombre de turbines compris entre 3 et 12.

6. Le module de turbine éolienne à axe vertical (1) selon l'une des revendications 1 à 5, dans lequel la première hauteur et la deuxième hauteur sont comprises entre 100 cm et 600 cm.

7. Le module de turbine éolienne à axe vertical (1) selon l'une des revendications 1 à 6, dans lequel les première et deuxième aubes de turbine (5, 5') sont composées, dans le sens vertical, d'au moins deux segments et que chacun des segments présente, dans le sens vertical, une hauteur comprise entre 30 cm et 70 cm, de préférence 50 cm.

8. Le module de turbine éolienne à axe vertical (1) selon l'une des revendications 1 à 7, dans lequel les première et deuxième surfaces de base (3, 3') et les première et deuxième surfaces de recouvrement (4, 4') sont réalisées en aluminium ou en acier.

9. Le module de turbine éolienne à axe vertical (1) selon l'une des revendications 1 à 8, dans lequel les première et deuxième aubes de turbine (5, 5') sont réalisées en aluminium, en plastique, en particulier en polyoxyméthylène (POM), plastique renforcé de fibres de verre (PRV), plastique renforcé de fibres de carbone (PRFC).

10. Le module de turbine éolienne à axe vertical (1) selon l'une des revendications 1 à 9, chacune des VAWT (2, 2') étant supportée en haut et en bas.

11. Le module de turbine éolienne à axe vertical (1) selon l'une des revendications 1 à 10, dans lequel le diamètre de chaque VAWT cylindrique (2, 2') étant compris entre 50 cm et 150 cm, de préférence 100 cm.

12. Système de turbine comprenant
au moins deux modules de turbine éolienne à axe vertical (1) selon l'une des revendications 1 à 11, qui sont disposés linéairement le long de l'axe horizontal, et
au moins un système de roue libre entre deux modules de turbine éolienne à axe vertical (1).

13. Le système de turbine selon la revendication 12, dans lequel au moins deux des modules de turbine éolienne à axe vertical (1) comportent un nombre différent de VAWT (2, 2').

14. Éolienne comprenant au moins un module de turbine éolienne à axe vertical (1) selon l'une des revendications 1 à 11 ou un système de turbine selon l'une des revendications 12 à 13 et au moins un générateur qui est relié au moins à un module de turbine éolienne à axe vertical (1) ou au système de turbine.
